# EUROPÄISCHE PATENTSCHRIFT

(11) **EP 1 607 165 B1**
(45) Veröffentlichungstag und Bekanntmachung des Hinweises auf die Patenterteilung: **22.10.2008**
(21) Anmeldenummer: 05012671.3
(22) Anmeldetag: 13.06.2005
(51) Int. Cl.: B23K 20/12, B29C 65/06

(54) **Vorrichtung zum Verbinden von Werkstücken nach der Methode des Reibrührschweissens mit einem Werkzeug bestehend aus zwei gegensinnig rotierbar ausgeführten Schultern**
Friction stir welding device for joining workpieces with a tool having two shoulders rotatable in opposite direction
Dispositif de soudage par friction agitation pour assembler des pièces avec un outil ayant deux épaulements pouvant tourner dans une direction opposée

(30) Priorität: 15.06.2004 DE 102004028560
(43) Veröffentlichungstag der Anmeldung: 21.12.2005
(73) Patentinhaber: GKSS-Forschungszentrum Geesthacht GmbH, 21502 Geesthacht (DE)
(72) Erfinder: Loitz, Henry, 22043 Hamburg (DE); Wulfsberg, Jens, P., 23843 Neritz (DE); Von der Wense, Jens, 25337 Kölln-Reisiek (DE); Von Strombeck, Alexander, 21039 Hamburg (DE); Schilling, Christoph, 21483 Lütau (DE); Dos Santos, Jorge, 21395 Tespe (Avendorf) (DE)
(74) Vertreter: UEXKÜLL & STOLBERG

(56) Entgegenhaltungen:
- US-B1- 6 199 745
- US-B1- 6 264 088
- PATENT ABSTRACTS OF JAPAN Bd. 2003, Nr. 12, 5. Dezember 2003 (2003-12-05) -& JP 2004 216435 A (MITSUBISHI HEAVY IND LTD), 5. August 2004 (2004-08-05)
- PATENT ABSTRACTS OF JAPAN Bd. 2003, Nr. 12, 5. Dezember 2003 (2003-12-05) -& JP 2004 050205 A (MITSUBISHI HEAVY IND LTD), 19. Februar 2004 (2004-02-19)
- PATENT ABSTRACTS OF JAPAN Bd. 2000, Nr. 26, 1. Juli 2002 (2002-07-01) -& JP 2001 252774 A (SHOWA DENKO KK), 18. September 2001 (2001-09-18)
- PATENT ABSTRACTS OF JAPAN Bd. 2002, Nr. 07, 3. Juli 2002 (2002-07-03) -& JP 2002 066760 A (MAZDA MOTOR CORP), 5. März 2002 (2002-03-05)

## Beschreibung

Die Erfindung betrifft eine Vorrichtung zum Verbinden von Werkstücken nach des Methode des Reibrührschweißens gemäß dem Oberbegriff des Anspruchs 1 (siehe, z.B. JP 2004/050 205 A).

Eine Vorrichtung dieser Art ist bekannt (EP-B-O 615 480 und DE-C-199 57 136). Das Reibrührschweißen, eine Weiterentwicklung des Reibschweißens und vielfach auch FSW (Friction Stir Welding) genannt, ist vom Grundsatz her seit mehreren Jahren bekannt und immer weiterentwickelt worden.

Ursprünglich wurde das Reibschweißen derart ausgeführt, daß zwei Werkstücke, die miteinander durch Reibschweißung verbunden werden sollen, gegeneinander im gewünschten Verbindungsbereich bewegt werden und dabei mit einer voreinstellbaren Kraft gegeneinander gedrückt werden. Durch die durch die Reibung entstehende Wärme erfolgt letztlich eine Plastifizierung des Werkstoffs der Werkstücke in dem Verbindungsbereich. Ist der Werkstoff ausreichend plastifiziert, kann zumindest im oberflächennahen Bereich der Verbindung eine ausreichende Durchmischung der Werkstoffe beider Werkstücke erfolgen, so daß bei Abkühlung die gewünschte Schweißverbindung zwischen beiden Werkstücken ausgebildet wird.

Beim Reibrührschweißen ist keine Relativbewegung der Werkstücke zur Erzeugung der Reibung und Materialdurchmischung notwendig. Statt dessen wird ein stiftartiger bzw. zylindrischer Vorsprung, von einem Antrieb bzw. einem Motor in geeignet große Rotation versetzt, an den Stirnbereich zweier zu verbindender, stumpfstoßend oder überlappend aneinander gelegter Werkstücke angesetzt. Der stiftartige Vorsprung wird, geeignet geführt, was beispielsweise mit einer speziellen Führungsvorrichtung oder auch mit einem Roboter geschehen kann, zusätzlich beispielsweise in eine Translationsbewegung längs der Stoßkanten beider zu verbindender Werkstücke versetzt. Die Hemmung der Ausweichbewegung der Werkstücke wird durch ein stabiles statisches Widerlager erzeugt.

Ist nach Beginn des Schweißvorgangs durch die infolge der Rotation des stiftartigen Vorsprungs mit dem Werkstoff der Werkstücke der angrenzende Werkstoffbereich erzeugte Reibungswärme mit dem Werkstoff der Werkstücke ausreichend plastifiziert, wird unter Aufrechterhaltung der Rotationsbewegung des stiftartigen Vorsprungs die Translationsbewegung längs des Nahtverlaufs zwischen den beiden Werkstücken ausgeführt, so daß beispielsweise eine Längsnaht ausgebildet wird.

Hinsichtlich der gattungsgemäßen Vorrichtung nach der EP-B-0 615 480 werden die Werkstücke mittels der bekannten Vorrichtung im Bereich um die Stoßkante bzw. die ausgebildete Schweißnaht über zwei Anschläge mit größerem Durchmesser als der stiftartige Vorsprung zusammengehalten, indem zwischen beiden Anschlägen der stiftartige Vorsprung eingeschlossen ist. Die aufeinanderzu gerichteten Seiten der beiden Anschläge bilden quasi Schultern, die jeweils auf einer Seite der Werkstücke um den Bereich der auszubildenden Schweißnaht die Oberflächen beider zu verbindender Werkstücke rotierend überstreichen. Wird beispielsweise orthogonal zur Oberfläche der beiden zu verbindenden Werkstücke mittels der Vorrichtung Druck ausgeübt, wird entsprechend auf der druckabgewandten Seite der zu verbindenden Werkstücke der Anlagedruck aufgrund der starren Beabstandung beider Schultern beider Anschläge der dortigen Schulter entsprechend vermindert. Aus diesem Grunde muß bei dieser Vorrichtung durch gesonderte Druckmittel für ein geeignetes Gegenlager gesorgt werden, was bei tafel- bzw. flächenförmigen Werkstücken wie Blechen und dergleichen noch mit vertretbarem Aufwand möglich ist, bei komplizierten mittels des Reibrührverfahrens hergestellter Schweißverbindungen aufgrund kompliziert geformter Werkstücke regelmäßig nicht möglich ist.

Hinzu kommt, daß in vielen Fertigungsbereichen verwendete Industrieroboter, beispielsweise im Kraftfahrzeugbau oder im Flugzeugbau, vielfältige Funktionen übernehmen, bei denen flächige oder sonstige Gegenlager zur Ausführung der Schweißverbindung nicht nur hinderlich, sondern auch vielfach überhaupt nicht vorgesehen werden können und zudem die Roboter selbst auch die erforderlichen Andruckkräfte nicht oder nur mit sehr großem Aufwand ausbilden können.

Aus der DE-C-199 57 136 ist eine Vorrichtung bekannt, bei der wenigstens einer der Anschläge zur Ausführung des Schweißverfahrens unter Einfluß der Werkstücke bewegbar ist und diese mit vorbestimmbarer Kraft einschließbar sind. Dadurch wird es möglich, daß die Vorrichtung selbst den notwendigen Druck auf beide Seiten der zu verbindenden Werkstücke aufbringen kann, ohne daß ein Gegenlager erforderlich ist. Somit können auch bei komplizierten Werkstücken Schweißnähte, bspw. dreidimensional im Raum verlaufende Schweißnähte, hergestellt werden, ohne daß eine Unterlage erforderlich ist, die bisher die Wurzel der Schweißnaht sichern mußte und gleichzeitig die Werkstücke unterstützen mußte. Auf diese Weise kann das Handhabungssystem vom Aufbringen der Kraft auf die zu verbindenden Werkstücke entlastet werden.

Um dieses zu erreichen, ist an der Vorrichtung, verbunden mit der Rotationsachse, ein Hubzylinder vorgesehen, der bei entsprechender Beaufschlagung mit einem Hydraulikmittel eine translatorische Bewegung erzeugt und somit die Kraft auf die zu verbindenden Werkstücke aufbringt.

Des weiteren ist verbunden mit der Rotationsachse ein erster rotierbarer Anschlag vorgesehen, der durch die Translationsbewegung von unten gegen die zu verbindenden Werkstücke drückt und die Werkstücke gegen einen zweiten feststehenden Anschlag einklemmt.

Bedingt durch den feststehenden oberen zweiten Anschlag und den rotierenden unteren ersten Anschlag entstehen auf der linken Seite und der rechten Seite der zu verbindenden Werkstücke während des Reibrührschweißens, aufgrund des Fließverhaltens des Materials, unterschiedliche Temperaturen. Daraus entstehen unterschiedliche Wärmeverteilungen innerhalb der zu verbindenden Werkstücke, was die Qualität der Schweißnaht beeinflussen kann. Dieses ist insbesondere bei dünnen Blechen problematisch, weil die resultierende Temperaturdifferenz sehr hoch ist, da kein ausreichend großer Wärmestrom an den Grenzflächen durch Konvektion vorherrscht. Die Bleche können dadurch in ihen Eigenschaften beeinträchtigt werden oder sogar im Schweißbereich zerstört werden, so daß ein Verbinden nicht mehr möglich ist. Des weiteren kann durch den bestehenden Temperaturunterschied die Qualität der Naht beeinflußt werden.

Die JP 2004-050205 A offenbart die unabhängige Einstellung des Drucks, der jeweils durch eine erste und eine zweite Schulter auf die Werkstücke ausgeübt wird. Darüber hinaus können deren Rotationsgeschwindigkeiten unabhängig eingestellt werden, und es sind zusätzliche Heiz- und Kühlvorrichtungen für die Schultern beschrieben.

Aus der JP 2001-252774 A ist eine Reibschweißvorrichtung mit einer oberen, zweiten Schulter bekannt, wobei der Stift und die Schulter unabhängig voneinander angetrieben sein können.

Die US 6 264 088 offenbart ein Reibrührschweißwerkzeug mit Stift und oberer, zweiter Schulter, wobei auch dieses Dokument keine untere Schulter offenbart.

Der Erfindung liegt somit auch die Aufgabe zugrunde, eine Vorrichtung zu schaffen, mit der es möglich wird, dünnwandige bzw. temperaturempfindliche Werkstücke mittels des Reibrührschweißens zu verbinden.

Die die Erfindung entsprechende Vorrichtung ist im Anspruch 1 definiert.

Durch das gegensinnige Rotieren wird es möglich, die Temperaturen genau einzustellen, sodaß kein Temperaturgradient zwischen den Seiten besteht. Die heißere Seite auf der Blechoberseite liegt bei gegensinniger Rotation der kalten Seite auf der Blechunterseite gegenüber und umgekehrt, so daß über einen thermischen Kurzschluß durch das Blech sofort ein Temperaturausgleich erfolgt. Ein Verbinden von dünnen Blechen wird dadurch möglich. Des weiteren heben sich die durch die unterschiedlichen Rotationsrichtungen Momente auch nahezu auf, sodaß auf das Handhabungssystem weniger Kraft und Momente wirken, da die Vorrichtung sich diesbezüglich nach außen neutral verhält.

Eine weitere Lehre der Erfindung sieht vor, daß die Rotation der Achse und die die Kraft erzeugende Bewegung entkoppelt unbeeinflußt voneinander in der Vorrichtung erzeugt und in die zu erzeugenden Werkstücke eingebracht werden. Auf diese Weise werden die Losbrechkräfte der Translation und Losbrechmomente der Rotation erheblich reduziert und ein genau steuerbares Anfahren der Translation bzw. der Rotation ist möglich. Sich insbesondere bei geringen Drehzahlen aufbauende Fließspannungen im Translationssystem, die sich schlagartig beim Überschreiten der Losbrechkraft ergeben, werden damit vermieden, wodurch Temperaturspitzen in den zu verbindenden Werkstücken unterbunden werden.

Eine weitere Lehre der Erfindung sieht vor, daß ein Bestandteil der erfindungsgemäßen Vorrichtung ein Antriebsmodul ist. Das Antriebsmodul selbst erzeugt dabei die Rotation und die translatorische Bewegung der mindestens einen Schulter bzw. des mindestens einen Anschlags. Durch das Vorsehen eines Antriebsmoduls, welches beide Bewegungsarten getrennt voneinander erzeugt, ist ein einfacher Aufbau der Vorrichtung gewährleistet. Eine weitere Lehre der Erfindung sieht vor, daß die Achse, die Bestandteil des Antriebsmoduls ist, in der Vorrichtung derart wälzgelagert ist, daß bei hohen Drehzahlen und großen zu übertragenden Momenten eine genaue translatorische Verschiebbarkeit gewährleistet ist, wodurch kleinste translatorische Verschiebungswege bei voller Rotationsbeanspruchung möglich sind.

Des weiteren sieht eine Lehre der Erfindung vor, daß die Vorrichtung ein Grundmodul aufweist. Das Grundmodul weist eine Aufnahme des Antriebsmoduls auf. Gemäß einer weiteren Lehre der Erfindung ist in dem Grundmodul ein Wälzlager vorgesehen, welches die Achse unter Aufrechterhaltung der translatorischen Bewegbarkeit lagert. Das Grundmodul 1 und das Antriebsmodul sind dabei über eine Linearführung verbunden, bei der es sich bspw. um Linearlager handelt. Durch die Linearlager wird gewährleistet, daß eine möglichst genaue Führung der translatorischen Bewegung erzeugt wird und die schweißprozeßbedingten Seitenkräfte nicht auf den rotatorischen sowie den translatorischen Antrieb wirken und diesen damit nicht schädigen können. Des weiteren sieht die Erfindung vor, daß zwischen Grund- und Antriebsmodul ein Element angeordnet ist, welches die translatorische Bewegung erzeugt und zwischen Antriebsmodul und Grundmodul plaziert ist bzw. mit Antriebsmodul und Grundmodul verbunden ist. Bei diesem Element handelt es sich um einen Hubzylinder oder alternativ um ein Hubzylindersystem. Das Hubzylindersystem ist elektrohydraulisch gesteuert und bei Verwendung mehrerer Zylinder elektronisch oder auf andere geeignete Weise zum Zwecke der Sicherstellung des synchronen Laufs gekoppelt, wobei es vorteilhaft ist, wenn für diese Steuerung ein Schrittmotor vorgesehen ist. Durch das Verbinden der beiden Module über das translationserzeugende kraftgeregelt verfahrbare Bewegungssystem kann die variable Kraft so exakt wie möglich eingehalten werden.

An dem Grundmodul selbst ist ein Anschluß für ein Handhabungssystem vorgesehen, welches einen Vortrieb entlang der zu verbindenden Bereiche der Werkstücke erzeugt. Bei einem derartigen Handhabungssystem handelt es sich vorteilhafterweise um einen Roboter. Der Roboter selber hat dabei nur noch für die Vortriebsbewegung zu sorgen und muß keine Kräfte mehr für das Verbinden der Werkstücke bereitstellen oder rückwirkende Momente aufnehmen, da Rotation sowie Translation in der Vorrichtung erzeugt und die aus der Bewegungshemmung resultierenden Kräftemomente voll kompensiert werden.

Eine weitere Lehre der Erfindung sieht vor, daß die Achse selbst über einen Synchronmotor rotatorisch angetrieben wird. Mit einem Synchronmotor lassen sich Drehzahlen optimal regeln. Des weiteren lassen sich Achse und Rotationsantrieb über ein Winkelgetriebe miteinander verbinden. Durch das Winkelgetriebe kann eine möglichst freie Anordnung des Antriebs erreicht werden und damit eine gute Handhabbarkeit der Vorrichtung.

Um eine möglichst genaue Regelung der auf die Werkstücke wirkenden Kräfte bereitstellen zu können, sieht eine weitere Lehre der Erfindung vor, daß ein Sensor oder ein Sensorsystem zur Aufnahme der auf die zu verbindenden Werkstücke wirkenden Kraft vorgesehen ist. Dieser Sensor ist am Grundmodul wirkend angeordnet bspw. zwischen zweiter Schulter bzw. zweitem Anschlag und dem Antriebsmodul. Der Sensor selber ist mit einer Steuerung der Vorrichtung verbunden. Um eine hohe Meßgenauigkeit zu erreichen, ist der Sensor selber vorgespannt. Bei einem derartigen Sensor handelt es sich bevorzugt um eine piezoelektrische Meßunterlagscheibe, die zum Zwecke der Fixierung und des Schutzes vor Zerstörung durch Zugbelastung vorgespannt eingebaut wird.

Aus einer weiteren Lehre der Erfindung ist der zweite Anschlag entweder am Grundmodul oder am Antriebsmodul angeordnet. Bei einer Anordnung der zweiten Schulter bzw. des zweiten Anschlags am Antriebsmodul ist es möglich, die Schulter bzw. den Anschlag rotatorisch anzutreiben. Hierfür ist ein zweiter Rotationsantrieb vorgesehen. Um ebenfalls niedrige Losbrechkräfte für die Bewegung der zweiten Schulter bzw. den zweiten Anschlag zu bewerkstelligen, ist diese ebenfalls wälzgelagert.

Eine weitere Lehre der Erfindung sieht vor, daß die zweite Schulter bzw. der zweite Anschlag über eine Hohlachse rotierbar antreibbar ist. Dabei ist die Rotationsachse der ersten Schulter bzw. des ersten Anschlags in der Hohlachse geführt. Hierdurch wird ein einfacher Aufbau ermöglicht.

Aufgrund der zwei Rotationsantriebe lassen sich über eine geeignete Steuerung die Drehzahlen der Schultern bzw. der Anschläge unterschiedlich einstellen, wodurch wiederum die einzubringenden Temperaturen und deren Verteilungen optimal eingestellt werden können.

Die Erfindung wird nun unter Bezugnahme auf die nachfolgenden schematischen Zeichnungen im Einzelnen beschrieben. Darin zeigen:
- Fig. 1: in perspektivischer Darstellung die erfindungsgemäße Vorrichtung,
- Fig. 2: eine perspektivische Darstellung des Grundmoduls der erfindungsgemäßen Vorrichtung,
- Fig. 3a: eine Draufsicht auf die erfindungsgemäße Vorrichtung,
- Fig. 3b: eine Schnittdarstellung der erfindungsgemäßen Vorrichtung entlang der Linie A-A aus Fig. 3a,
- Fig. 4a: eine Seitenansicht des Grundmoduls,
- Fig. 4b: eine Schnittdarstellung des Grundmoduls der erfindungsgemäßen Vorrichtung entlang der Linie D-D aus Fig. 4a,
- Fig. 5a: eine Unteransicht des Grundmoduls der erfindungsgemäßen Vorrichtung,
- Fig. 5b: eine Schnittdarstellung durch das Grundmodul entlang der Linie B-B gem. Fig. 5a,
- Fig. 5c: eine Schnittansicht durch das Grundmodul der erfindungsgemäßen Vorrichtung entlang der Linie C-F gem. Fig. 5a,
- Fig. 5d: eine Vergrößerung eines Ausschnitts aus Fig. 5c,
- Fig. 6a: eine Draufsicht auf die erfindungsgemäße Vorrichtung,
- Fig. 6b: eine Schnittansicht durch das Antriebsmodul der erfindungsgemäßen Vorrichtung entlang der Linie H-F gem. Fig. 6a,
- Fig. 6c: eine Schnittansicht durch die erfindungsgemäße Vorrichtung entlang der Linie G-N gem. Fig. 6a,
- Fig. 6d: eine Schnittansicht durch das Antriebsmodul der erfindungsgemäßen Vorrichtung entlang der Linie 0-R gem. Fig. 6b,
- Fig. 6e: eine vergrößerte Darstellung eines Bereichs x gem. Fig. 6b,
- Fig. 7: eine schematische Schnittansicht durch eine weitere Ausführungsform der erfindungsgemäßen Vorrichtung und
- Fig. 8: eine Prinzipskizze der Wärmeverteilung innerhalb der zu verbindenden Werkstücke bei einer alternativen Ausführungsform der erfindungsgemäßen Vorrichtung.

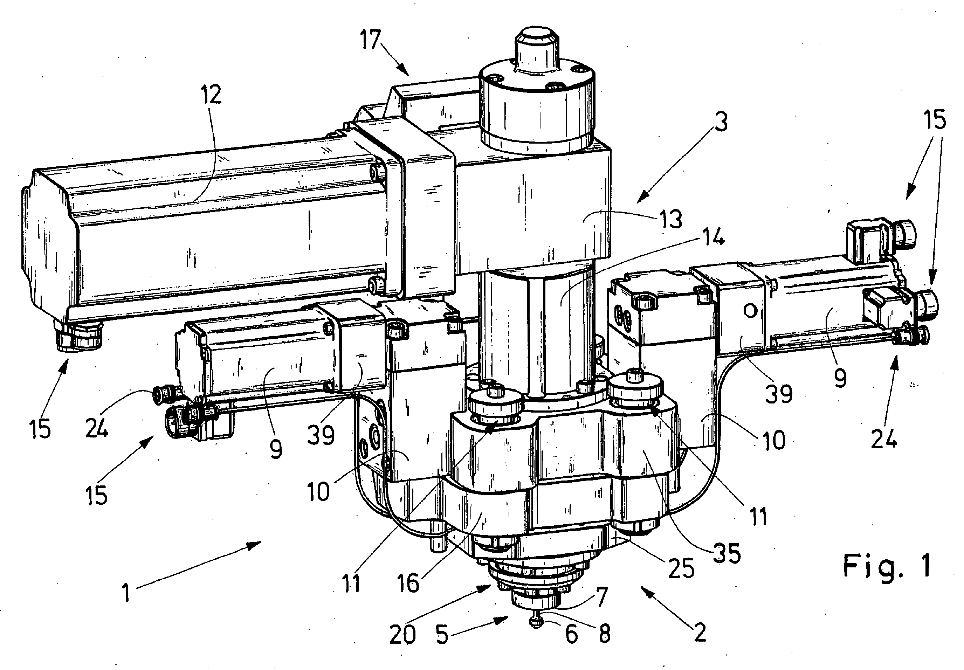

In Fig. 1 ist eine erfindungsgemäße Schweißvorrichtung zum Reibrührschweißen 1 dargestellt. Die Vorrichtung 1 besteht aus einem Grundmodul 2 und einem Antriebsmodul 3, die an einer Handhabungsvorrichtung 17 angeschlossen ist. Bei der Handhabungsvorrichtung 17 handelt es sich bspw. um einen Roboter.

Die Vorrichtung 1 weist ein Doppelschulterwerkzeug 5 auf, welches aus einem Stift 8, einer am Stift 8 befestigt angebrachten ersten Schulter 6 und einer am Grundmodul 2 oder am Antriebsmodul 3 vorgesehenen zweiten rotierbaren Schulter 7. Das Doppelschulterwerkzeug 5 ist in einen Werkzeughalter 20 eingesetzt.

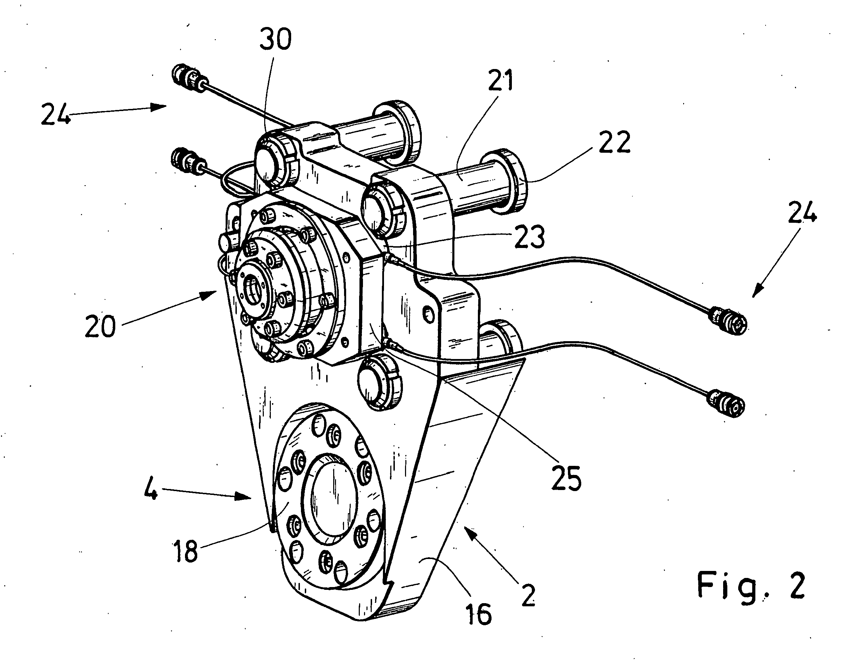

Das Antriebsmodul 3 weist einen Werkzeugantrieb 12 auf, der eine Achse 33, 33', die in einer Spindellagerung 14 vorgesehen ist, über ein Winkelgetriebe 13 antreibt. Des weiteren weist das Antriebsmodul 3 einen Anrieb (nicht dargestellt) für die Hohlachse 32 mit geeigneten Übertragungsmitteln (ebenfalls nicht dargestellt) auf. Das Antriebsmodul 3 und die Grundplatte 2 sind über Linearlager 11 miteinander verbunden. Wie in Fig. 2 dargestellt ist, besteht das Linearlager 11 aus einer Präzisionswelle 21 mit einem Anschlag 22 auf der antriebszugewandten Seite und einem Anschlag 30 auf der werkzeugzugewandten Seite des Linearlagers 11.

Über das Linearlager 11 ist eine Translationsbewegung des Antriebsmodul 3 gegenüber dem Grundmodul 2 möglich, wodurch eine Translationsbewegung der Hohlachse 32 oder der Achse 33 erzeugt wird. Der Antrieb erfolgt über einen Linearhubantrieb 10, der für dessen Steuerung mit einem Schrittmotor 9 verbunden ist. Schrittmotor 9 und der Werkzeugantrieb 12 weisen Antriebsanschlüsse 15 auf, die den Motoren 9, 12 die entsprechende Energie zuführen. Wie aus Fig. 2 ersichtlich, weist das Grundmodul 2 einen Anschluß 4 der Schweißvorrichtung 1 an die Handhabungsvorrichtung 17 auf. Der Anschluß 4 ist mit einem Zentrierzapfen 18 versehen, über den der Anschluß ermöglicht wird. Der Werkzeughalter 20 ist auf einer Grundplatte 25 angeordnet. Zwischen der Grundplatte 25 und einer Basis 16 des Grundmoduls 2 sind Meßsensoren 23 angeordnet, die über einen Meßsensoranschluß 24 verfügen, über den sie mit einem Sensordatenverarbeitungssystem und/oder einem Sensordatenverstärkungssystem und einer Vorrichtungssteuer verbunden sind.

Die Steuerung der Vorrichtung 1 erfolgt über einen Verbund von echtzeitfähigen Antriebssteuerungen, die motion-Control- sowie SPS-Funktionalität vereinen. Durch eine freie Programmierbarkeit und Zugriff auf analoge/digitale Ein-/Ausgabe sowie die Möglichkeit einer Einbindung verschiedener Feldbussysteme ist die Kommunikation mit den Steuerungen des Handhabungssystems 17 und auch mit übergeordneten Steuerungssystemen möglich.

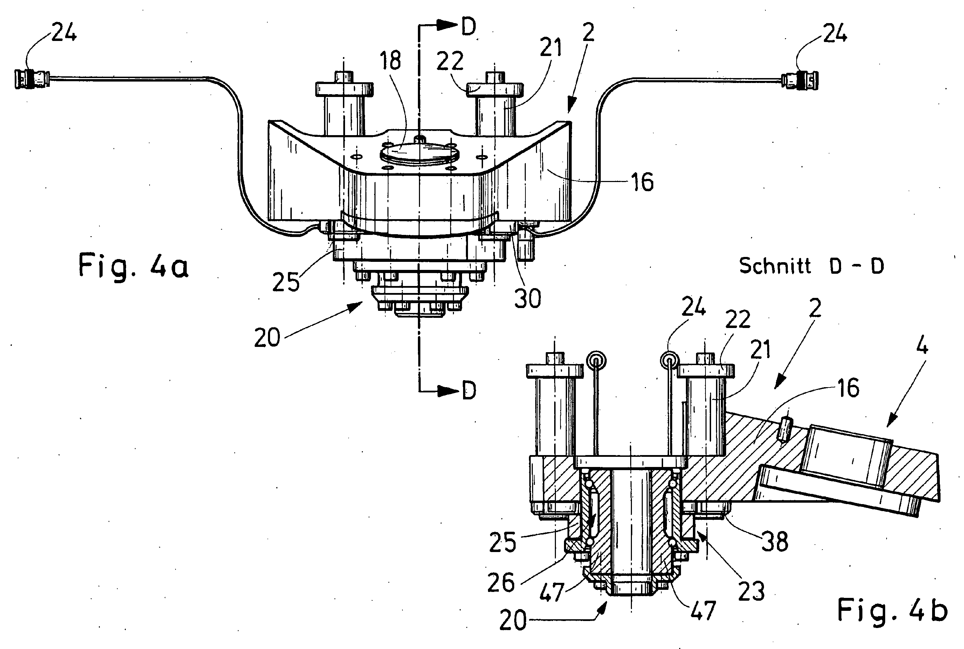

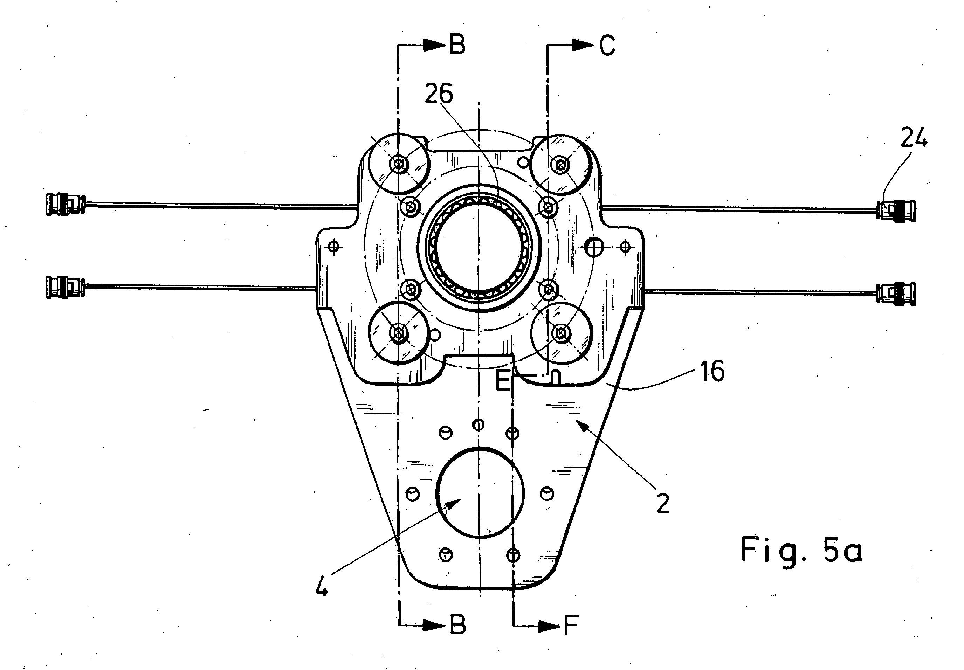

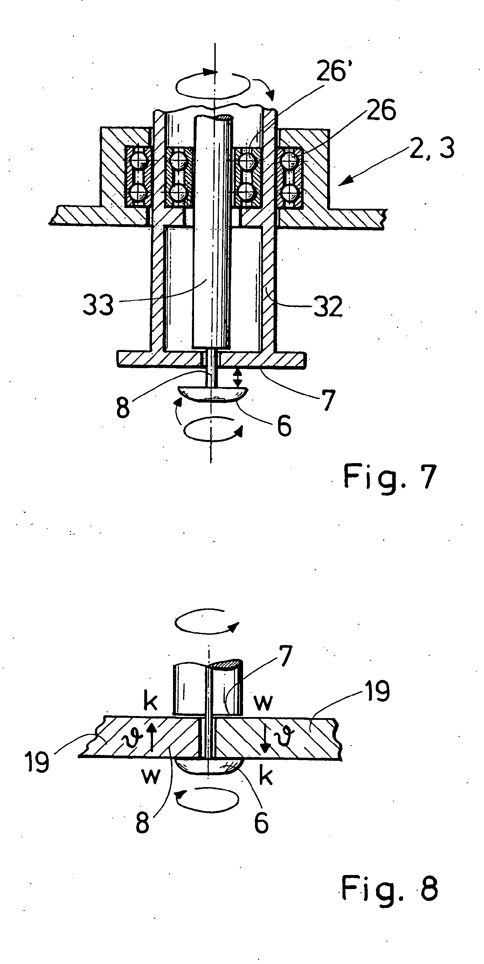

Der Werkzeughalter 20 weist ein Wälzlager 26 auf, wie in Fig. 4b ersichtlich ist. Fig. 4b stellt eine Schnittansicht entlang der Linie D-D dar, die in Fig. 4a eingezeichnet ist. Innerhalb des Wälzlagers 26 ist eine Aufnahme (Achsenführung 47) für die Hohlachse 32 vorgesehen (s. Fig. 5a und Fig. 7).

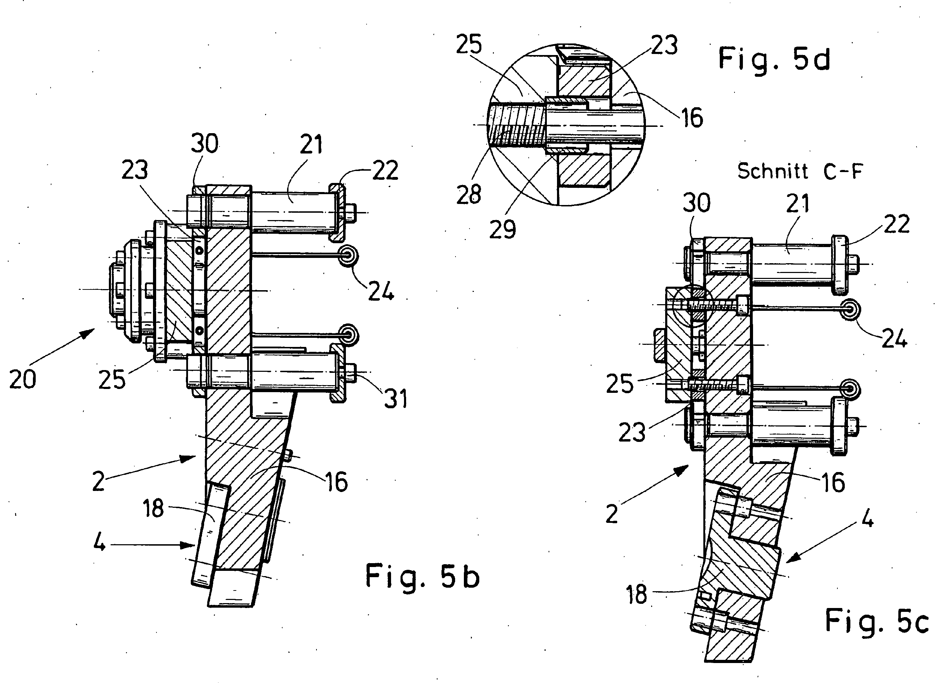

Aus Fig. 5b, die eine Schnittdarstellung entlang der Linie B-B gem. Fig. 5a ist, ist ersichtlich, daß das Linearlager 11 mit der Basis 16 des Grundmoduls 2 verschraubt ist. Die Welle 21 wird dabei zusätzlich durch den Anschlag 30 an der Basis 16 gesichert. Am gegenüberliegenden Ende der Welle 21 ist der Anschlag 22 lösbar durch eine Zylinderschraube 31 auf der Welle 21 befestigt.

Ebenfalls aus Fig. 5b ist die Anordnung der Meßsensoren 23 ersichtlich. Eine Schnittdarstellung durch den Bereich der Meßsensoren ist in Fig. 5c dargestellt. Der Schnitt verläuft entlang der Linie C-F gem. Fig. 5a. Grundplatte 25 und Basis 16 des Grundmoduls 2 sind über Dehnschrauben 28 miteinander verbunden. Die Dehnschraube 28 läuft durch den Meßsensor 23. In Fig. 5d ist der Bereich Grundplatte 25, Basis 16 und dazwischen angeordneter Meßsensor 23 vergrößert dargestellt. Die Dehnschraube 28 ist dabei in einer Zentrierbuchse 29 angeordnet. Die Zentrierbuchse sitzt mittig im Meßsensor 23.

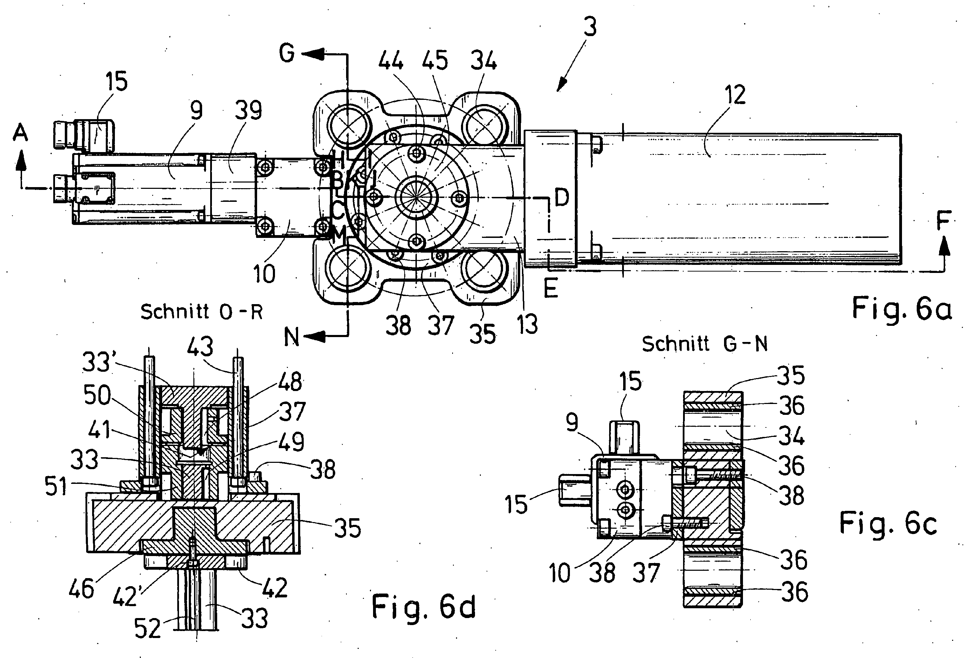

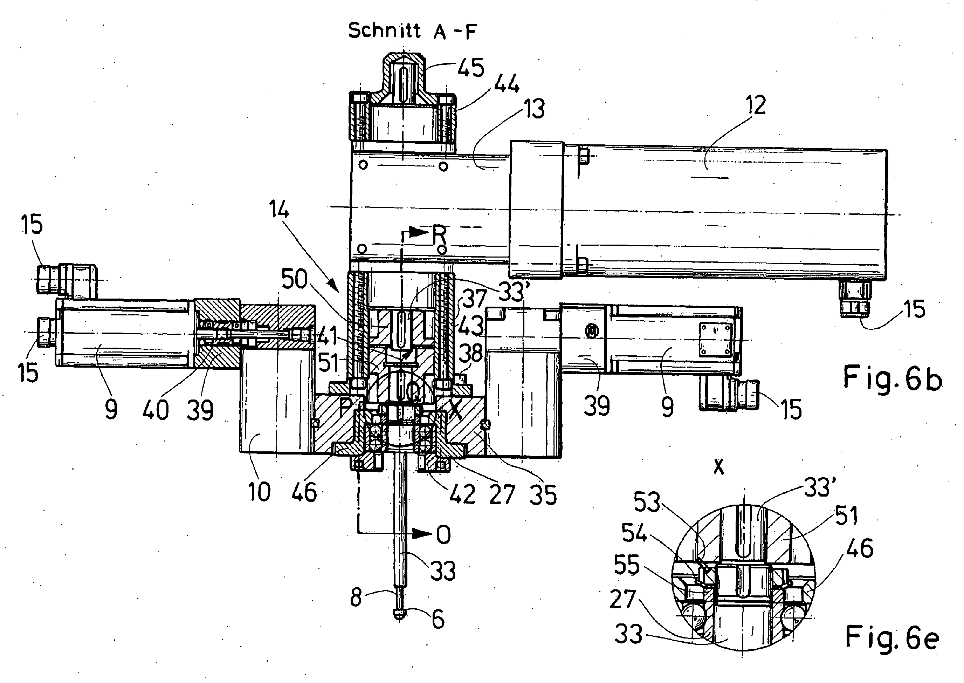

In den Fig. 6a bis 6e ist der Aufbau des Antriebsmoduls 3 dargestellt. Fig. 6a zeigt eine Draufsicht auf das Antriebsmodul 3. Das Antriebsmodul 3 weist eine Antriebsmodulgrundplatte 35 auf, die mit Bohrungen 34 versehen ist. In die Bohrungen 34 werden die Präzisionswellen 21 eingeführt, um die Verbindung zwischen Antriebsmodul 3 und Grundmodul 2 zu erreichen. In den Bohrungen 34 ist ein Linearkugellager 36 vorgesehen, um eine möglichst reibungsfreie Bewegung der Präzisionswelle 21 in der Bohrung 34 zu ermöglichen. Dieses ist aus Fig. 6c ersichtlich. Fig. 6c stellt einen Schnitt entlang der Linie G-N durch das Antriebsmodul 3 dar, wie aus Fig. 6a ersichtlich. An der Grundplatte 35 ist ein Getriebeflansch 37 über Zentrierschrauben 38 befestigt. Dieses ist aus den Fig. 6b und 6d ersichtlich. Fig. 6b stellt einen Schnitt durch das Antriebsmodul 3 entlang der Linie A-F dar, wie in Fig. 6a abgebildet. Fig. 6d stellt einen Schnitt durch das Antriebsmodul entlang der Linie 0-R dar, wie in Fig. 6b dargestellt.

Zwischen Schrittmotor 9 und Hubantrieb 10 ist ein Zwischenflansch 39 angeordnet, in dem eine Kupplung 40 vorgesehen ist. Über die Kupplung 40 wirkt der Schrittmotor 9 auf den Linearhubantrieb 10. Dieses ist aus Fig. 6b ersichtlich.

In der Spindellagerung 14 ist eine Klauenkupplung 41 vorgesehen. Die Klauenkupplung 41 besteht aus einem Kupplungsoberteil 50 und einem Kupplungsunterteil 51. Das Kupplungsoberteil 50 ist mit der Achse 33' über eine Paßfeder 48 verbunden. Die Achse 33 ist mit dem Kupplungsunterteil 51 über eine Paßfeder 49 verbunden. Dieses ist aus Fig. 6d ersichtlich. Am oberen Ende des Antriebsmoduls 3 ist eine Kappe 45 vorgesehen, die die Vorrichtung nach oben verschließt. Die Kappe 45 ist über Zentrierschrauben 44 am Winkelgetriebe 13 angebracht. Die Antriebsmodulgrundplatte 35 ist mit einer Bohrung zentrisch versehen, durch die die Achse 33 hindurchgeführt ist. In dieser Bohrung ist ein Lagerschild 46 angeordnet, in dem ein Wälzlager 27 angeordnet ist. Das Wälzlager 27 wird über einen Lagerflansch 42 im Lagerschild 46 gehalten. Lagerflansch 42 ist mit dem Lagerschild 46 über Zentrierschrauben 42' verbunden. Die Achse 33 ist im Wälzlager 27 geführt. Im oberen Ende des Wälzlagers.27 ist eine Distanzscheibe 55 vorgesehen, die über ein Sicherungsblech 54 von einer Nutmutter 53 befestigt wird. Die Nutmutter 53 ist dabei um die Achse 33 geführt. Dieses ist vergrößert in Fig. 6e dargestellt.

Der Getriebeflansch 37 stellt die Außenwand der Spindellagerung 14 dar. Die Getriebewand 37 ist dabei über Zentrierschrauben 43 am Winkelgetriebe 13 befestigt.

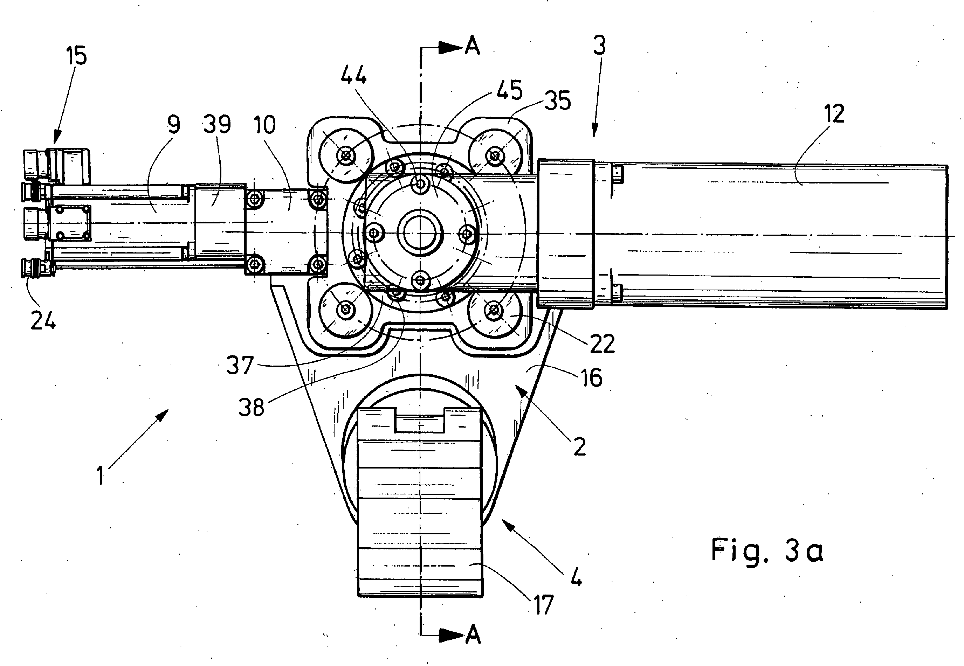

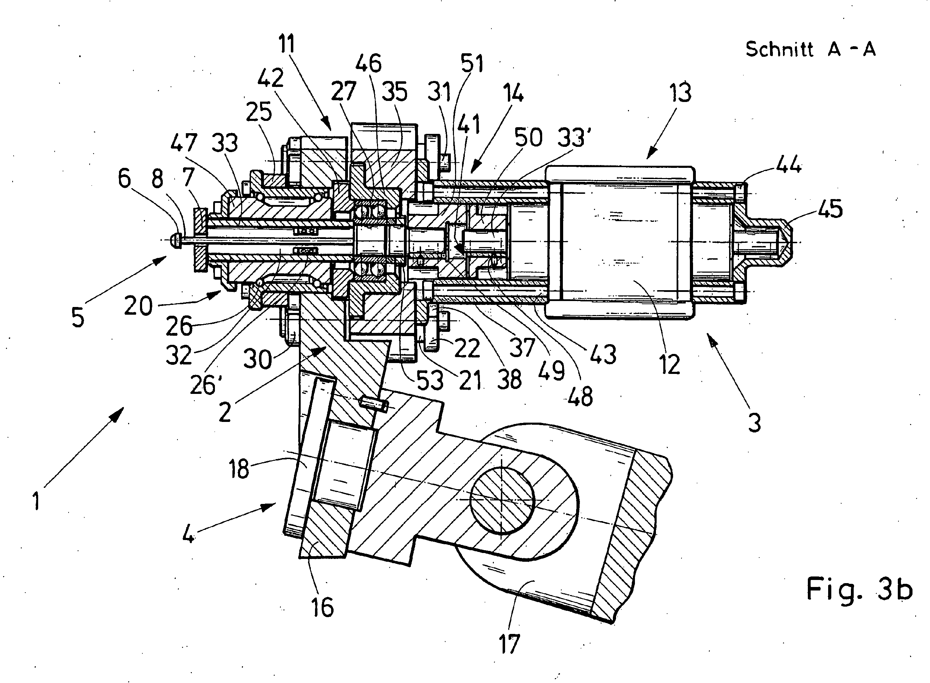

Fig. 3b stellt den zusammengesetzten Zustand der Schweißvorrichtung 1 dar. Die Achse 33 wird dabei durch die Achsenführung 47 des Grundmoduls eingesetzt. Gleiches gilt für die Linearlager 11, bei denen die Präzisionswellen durch die Bohrungen 34 der Antriebsmodulgrundplatte 35 geführt sind. Fig. 3b stellt einen Schnitt entlang der Linie AA durch die erfindungsgemäße Vorrichtung gem. Fig. 3a dar.

In Fig. 7 ist schematisch die Anordnung von Hohlachse 32 und Achse 33 dargestellt. Dabei ist die zweite Schulter 7 einstückig mit einer Hohlachse 32 ausgeführt. Die Hohlachse 32 ist über einen weiteren Antrieb mit evtl. zwischengeschaltetem Getriebe rotierbar. Antrieb und Getriebe sind nicht dargestellt.

Zwischen der Achse 33 und der Hohlachse 32 ist ein Wälzlager 26' vorgesehen, welches die Achsen gegeneinander führt. Die Hohlachse 32 ist dabei über ein Wälzlager 26 in der Schweißvorrichtung geführt. Sowohl Hohlachse 32 als auch Achse 33 können translatorisch bewegt werden, um die notwendige Kraft für das Reibrührschweißen auf zu verbindende Werkstücke aufzubringen. Durch das Einbauen der gegensinnige Rotation der zweiten Schulter 7 und der ersten Schulter 6, wie in Fig. 8 dargestellt, ergeben sich unterschiedliche Wärmeverteilungen an den Oberflächen der zu verbindenden Werkstücke 19. Es entstehen wärmere Bereiche W und kältere Bereiche K. Zwischen diesen Bereichen findet ein Wärmefluß zum Ausgleich der Temperaturen an den Oberflächen statt. Dieser ausgleichende Wärmefluß ist positiv, da dadurch Wärmespitzen vermieden werden können, welche sich insbesondere bei dem Reibrührschweißen von dünnen Werkstücken als negativ erwiesen haben.

Die Funktionsweise der Vorrichtung 1 ergibt sich wie folgt:

Stift 8 und daran angeschlossene erste Schulter 6 werden durch den Werkzeugantrieb 12 über das Winkelgetriebe 13 und die Achsen 33, 33' angetrieben. Die zweite Schulter 7 ist ebenfalls über einen nicht dargestellten Antriebsstrang mittels Hohlachse 32 rotierbar. Um die notwendige Kraft zwischen den Schultern 6 und 7 aufbringen zu können, ist der Linearhubantrieb 10 in nicht dargestellter Weise mit der Basis 16 des Grundmoduls 2 verbunden. Durch Ansteuerung über den Schrittmotor 9 wird das Antriebsmodul 3 gegen das Grundmodul 2 entlang der Linearlager 11 translatorisch bewegt, so daß die erste Schulter 6 gegen die Werkstücke gepreßt wird. Der Hub kann dabei bspw. insgesamt 13 mm betragen und Kräfte bis 12 kN erzeugen. Über das Sensorsystem, bestehend aus den Sensoren 23 wird die durch den Linearhubantrieb 10 erzeugte Kraft gemessen und einer Steuerung zugeführt. Die Steuerung wertet diese Kraftmeßergebnisse aus und regelt über den Schrittmotor 9 die über den Linearhubantrieb 10 aufgebrachte Kraft. Auf diese Weise kann die wirksame Kraft sehr genau eingestellt werden. Bedingt durch die Entkopplung von Translationsbewegung und Rotation kann das Doppelschulterwerkzeug 5 bzw. Stift 8 und erste Schulter 6 ohne nennenswert bedeutsame Losbrechmomente in Rotation versetzt werden. Des weiteren erfolgt die Translationsbewegung feinfühlig ohne Losbrechkräfte, so daß sich die Vorspannkräfte ohne Spitzen stetig verteilen. Ein n genaues Anfahren des Schweißvorganges ist damit möglich, und es werden Momentenspitzen vermieden. Des weiteren kann über die Steuerung des Linearhubantriebes eine Anpassung des Schweißvorgangs an unterschiedliche Materialstärken der zu verbindenden Werkstücke ermöglicht werden.

### Bezugszeichenliste

- 1: Schweißvorrichtung
- 2: Grundmodul
- 3: Antriebsmodul
- 4: Anschluß an Handhabungsvorrichtung
- 5: Doppelschulterwerkzeug
- 6: erste Schulter
- 7: zweite Schulter
- 8: Stift
- 9: Schrittmotor
- 10: Linearhubantrieb
- 11: Linearlager
- 12: Werkzeugantrieb
- 13: Winkelgetriebe
- 14: Spindellagerung
- 15: Antriebsanschluß
- 16: Basis
- 17: Handhabungsvorrichtung
- 18: Zentrierzapfen
- 19: Werkstück
- 20: Werkzeughalter
- 21: Präzisionswelle
- 22: Anschlag
- 23: Meßsensor
- 24: Meßsensoranschluß
- 25: Grundplatte
- 26: Wälzlager
- 26': Wälzlager
- 27: Wälzlager
- 28: Dehnschraube
- 29: Zentrierbuchse
- 30: Anschlag
- 31: Zylinderschraube
- 32: Hohlachse
- 33: Achse
- 33': Achse
- 34: Bohrung
- 35: Antriebsmodul-Grundplatte
- 36: Linearkugellager
- 37: Getriebeflansch
- 38: Zentrierschraube
- 39: Zwischenflansch
- 40: Kupplung
- 41: Klauenkupplung
- 42: Lagerflansch
- 42': Zentri erschraube
- 43: Zentrierschraube
- 44: Zentrierschraube
- 45: Kappe
- 46: Lagerschild
- 47: Achsenführung
- 48: Paßfeder
- 49: Paßfeder
- 50: Kupplungsoberteil
- 51: Kupplungsunterteil
- 53: Nutmutter
- 54: Sicherungsblech
- 55: Stanzscheibe
- W: Warmbereich
- K: Kaltbereich

## Patentansprüche

1. Vorrichtung zum Verbinden von Werkstücken nach der Methode des Reibrührschweißens mit einer rotierend antreibbaren Achse (33, 33') an deren von der Antriebsseite der Achse abgewandten Seite ein stiftartiger Vorsprung (8) angeordnet ist, an dessen Ende ein aus einer ersten Schulter (6) bestehender erster Anschlag angeordnet ist, wobei die erste Schulter (6) einen Durchmesser aufweist, der größer als der Durchmesser des stiftartigen Vorsprungs (8) ist, und mit einem aus einer zweiten Schulter (7) bestehenden zweiten Anschlag, der derart angeordnet ist, daß die zu verbindenden Werkstücke (19) zwischen den Anschlägen (6, 7) einschließbar sind, indem mindestens einer der Anschläge (6, 7) translatorisch bewegbar ist, um die Werkstücke (19) mit einer vorbestimmten Kraft in Richtung des anderen Anschlags einzuschließen, wobei die zweite Schulter (7) bzw. der zweite Anschlag rotierbar ausgeführt ist
**dadurch gekennzeichnet, daß**
die erste und die zweite Schulter (6, 7) bzw. der erste und der zweite Anschlag, so eingebaut sind, daß die beiden Schulter (6, 7) gegensinnig rotierend ausgeführt sind.

2. Vorrichtung nach Anspruch 1, **dadurch gekennzeichnet, daß** die Vorrichtung (1) derart ausgeführt ist, daß die Rotation der Achse (33, 33') und die die Kraft erzeugende Bewegung entkoppelt unbeeinflußt voneinander in der Vorrichtung (1) erzeugt und in die zu verbindenden Werkstücke (19) eingebracht werden.

3. Vorrichtung nach Anspruch 1 oder 2, **dadurch gekennzeichnet, daß** ein Antriebsmodul (3) vorgesehen ist.

4. Vorrichtung nach Anspruch 3, **dadurch gekennzeichnet, daß** das Antriebsmodul die Rotation der Achse (33, 33') erzeugt.

5. Vorrichtung nach Anspruch 3 oder 4, **dadurch gekennzeichnet, daß** das Antriebsmodul (3) die translatorische Bewegung der mindestens einen Schulter bzw. des mindestens einen Anschlages erzeugt.

6. Vorrichtung nach einem der Ansprüche 1 bis 5, **dadurch gekennzeichnet, daß** die Achse (33, 33') Bestandteil des Antriebsmoduls ist.

7. Vorrichtung nach einem der Ansprüche 1 bis 6, **dadurch gekennzeichnet, daß** die Achse wälzgelagert ist.

8. Vorrichtung nach einem der Ansprüche 1 bis 7, **dadurch gekennzeichnet, daß** ein Grundmodul (2) vorgesehen ist.

9. Vorrichtung nach Anspruch 8, **dadurch gekennzeichnet, daß** an dem Grundmodul (2) eine Aufnahme des Antriebsmoduls (3) vorgesehen ist.

10. Vorrichtung nach Anspruch 8 oder 9, **dadurch gekennzeichnet, daß** ein die Achse (33) lagerndes Wälzlager (26) im Grundmodul (2) vorgesehen ist.

11. Vorrichtung nach einem der Ansprüche 8 bis 10, **dadurch gekennzeichnet, daß** das Grundmodul (2) und das Antriebsmodul (3) über eine Linearführung (11) verbunden sind.

12. Vorrichtung nach Anspruch 11, **dadurch gekennzeichnet, daß** es sich bei der Linearführung (11) um ein Linearlager (36) handelt.

13. Vorrichtung nach einem der Ansprüche 8 bis 12, **dadurch gekennzeichnet, daß** ein zwischen Grundmodul (2) und Antriebsmodul (3) angeordnetes Element (10) zur Erzeugung der translatorischen Bewegung vorgesehen ist, welches mit Grundmodul (2) und Antriebsmodul (3) verbunden ist.

14. Vorrichtung nach Anspruch 13, **dadurch gekennzeichnet, daß** es sich bei dem Element um einen Hubzylinder (10) handelt.

15. Vorrichtung nach Anspruch 14, **dadurch gekennzeichnet, daß** es sich bei dem Element um einen Hubzylindersystem (10) handelt.

16. Vorrichtung nach Anspruch 15, **dadurch gekennzeichnet, daß** das Hubzylindersystem (10) elektrohydraulisch gesteuert ist.

17. Vorrichtung nach Anspruch 15 oder 16, **dadurch gekennzeichnet, daß** für die Steuerung des Hubzylindersystems (10) ein Schrittmotor (9) vorgesehen ist.

18. Vorrichtung nach einem der Ansprüche 8 bis 17, **dadurch gekennzeichnet, daß** an dem Grundmodul (2) ein Anschluß (4) für ein Handhabungssystem (17) vorgesehen ist.

19. Vorrichtung nach Anspruch 18, in Kombination mit einem Handhabungssystem (17) **dadurch gekennzeichnet, daß** das Handhabungssystem (17) einen Vortrieb entlang der zu verbindenden Bereiche der Werkstücke (19) erzeugt.

20. Vorrichtung nach Anspruch 18 oder 19, in Kombination mit einem Handhabungssystem (17) **dadurch gekennzeichnet, daß** es sich bei dem Handhabungssystem (17) um einen Roboter handelt.

21. Vorrichtung nach einem der Ansprüche 1 bis 20, **dadurch gekennzeichnet, daß** die Achse über einen Synchronmotor (12) rotatorisch antreibbar ist.

22. Vorrichtung nach einem der Ansprüche 1 bis 21, **dadurch gekennzeichnet, daß** die Achse über ein Winkgetriebe (13) mit ihrem Rotationsantrieb verbunden ist.

23. Vorrichtung nach einem der Ansprüche 1 bis 22, **dadurch gekennzeichnet, daß** ein Sensor (23) oder ein Sensorsystem zur Aufnahme der auf die zu verbindenden Werkstücke (19) wirkenden Kraft vorgesehen ist.

24. Vorrichtung nach Anspruch 23, **dadurch gekennzeichnet, daß** der Sensor (23) am Grundmodul (2) wirkend zwischen zweiter Schulter (7) bzw. zweitem Anschlag und dem Antriebsmodul (3) angeordnet ist.

25. Vorrichtung nach Anspruch 23 oder 24, **dadurch gekennzeichnet, daß** der Sensor (23) mit einer Steuerung der Vorrichtung verbunden ist.

26. Vorrichtung nach einem der Ansprüche 23 bis 25, **dadurch gekennzeichnet, daß** es sich bei dem Sensor (23) um eine piezoelektrische Meßunterlagscheibe handelt.

27. Vorrichtung nach einem der Ansprüche 23 bis 26, **dadurch gekennzeichnet, daß** der Sensor (23) vorgespannt ist.

28. Vorrichtung nach einem der Ansprüche 3 bis 27, **dadurch gekennzeichnet, daß** die zweite Schulter (7) bzw. der zweite Anschlag am Antriebsmodul (3) angeordnet ist.

29. Vorrichtung nach einem der Ansprüche 1 bis 28, **dadurch gekennzeichnet, daß** ein zweiter Rotationsantrieb zum Antrieb der zweiten Schulter (7) bzw. des zweiten Anschlags vorgesehen ist.

30. Vorrichtung nach einem der Ansprüche 1 bis 29, **dadurch gekennzeichnet, daß** die zweite Schulter (7) bzw. der zweite Anschlag wälzgelagert ist.

31. Vorrichtung nach einem der Anspruche 1 bis 30, **dadurch gekennzeichnet, daß** die zweite Schulter bzw. der zweite Anschlag über eine Hohlachse (32) rotierbar ist.

32. Vorrichtung nach Anspruch 31, **dadurch gekennzeichnet, daß** in der Hohlachse (32) die Rotationsachse (33, 33') der ersten Schulter (6) bzw. des ersten Anschlags geführt ist.

33. Vorrichtung nach einem der Ansprüche 8 bis 27, **dadurch gekennzeichnet, daß** die zweite Schulter (7) bzw. der zweite Anschlag am Grundmodul (2) angeordnet ist.

34. Vorrichtung nach einem der Ansprüche 1 bis 33, **dadurch gekennzeichnet, daß** die Drehzahlen der Schultern (6, 7) bzw. Anschläge unterschiedlich einstellbar sind.

## Claims

1. Device for joining workpieces based on the method of friction stir welding, with a rotating, drivable shaft (33, 33'), on the end of which remote from the driving end of the shaft a pin-type projection (8) is disposed, at the end of which a first stop comprising a first shoulder (6) is disposed, and the first shoulder (6) is of a diameter that is bigger than the diameter of the pin-type projection (8), and with a second stop comprising a second shoulder (7) which is disposed so that the workpieces (19) to be joined can be enclosed between the stops (6, 7), and at least one of the stops (6, 7) can be moved in translation in the direction towards the other stop in order to enclose the workpieces (19) with a predefined force, and the second shoulder (7) or second stop is rotatable,
**characterised in that**
the first and the second shoulder (6, 7) or the first and second stop are mounted so that the two shoulders (6, 7) rotate in opposite directions.

2. Device as claimed in claim 1, **characterised in that** the device (1) is designed so that the rotation of the shaft (33, 33') and the movement producing the force are generated in the device (1) and transmitted to the workpieces (19) to be joined in an uncoupled manner and do not affect one another.

3. Device as claimed in claim 1 or 2, **characterised in that** a drive module (3) is provided.

4. Device as claimed in claim 3, **characterised in that** the drive module generates the rotation of the shaft (33, 33').

5. Device as claimed in claim 3 or 4, **characterised in that** the drive module (3) generates the translating movement of the at least one shoulder or the at least one stop.

6. Device as claimed in one of claims 1 to 5, **characterised in that** the shaft (33, 33') is a component of the drive module.

7. Device as claimed in one of claims 1 to 6, **characterised in that** the shaft is mounted in a friction-bearing arrangement.

8. Device as claimed in one of claims 1 to 7, **characterised in that** a base module (2) is provided.

9. Device as claimed in claim 8, **characterised in that** a mount for the drive module (3) is provided on the base module (2).

10. Device as claimed in claim 8 or 9, **characterised in that** an antifriction bearing (26) is provided in the base module (2) for mounting the shaft (33).

11. Device as claimed in one of claims 8 to 10, **characterised in that** the base module (2) and the drive module (3) are connected via a linear guide (11).

12. Device as claimed in claim 11, **characterised in that** the linear guide (11) is a linear bearing (36).

13. Device as claimed in one of claims 8 to 12, **characterised in that**, in order to produce the translating movement, an element (10) is disposed between the base module (2) and drive module (3), which is connected to the base module (2) and drive module (3).

14. Device as claimed in claim 13, **characterised in that** the element is a lifting cylinder (10).

15. Device as claimed in claim 14, **characterised in that** the element is a lifting cylinder system (10).

16. Device as claimed in claim 15, **characterised in that** the lifting cylinder system (10) is electro-hydraulically controlled.

17. Device as claimed in claim 15 or 16, **characterised in that** a stepper motor (9) is provided as a means of controlling the lifting cylinder system (10).

18. Device as claimed in one of claims 8 to 17, **characterised in that** a terminal (4) for a manipulating system (17) is provided on the base module (2).

19. Device as claimed in claim 18 in combination with a manipulating system (17), **characterised in that** the manipulating system (17) generates a forward driving movement along the regions of the workpieces (19) to be joined.

20. Device as claimed in claim 18 or 19 in combination with a manipulating system (17), **characterised in that** the manipulating system (17) is a robot.

21. Device as claimed in one of claims 1 to 20, **characterised in that** the shaft can be driven in rotation by means of a synchronous motor (12).

22. Device as claimed in one of claims 1 to 21, **characterised in that** the shaft is connected to its rotary drive by means of an angle transmission (13).

23. Device as claimed in one of claims 1 to 22, **characterised in that** a sensor (23) or a sensor system is provided as a means of recording the force acting on the workpieces (19) to be joined.

24. Device as claimed in claim 23, **characterised in that** the sensor (23) is disposed on the base module (2) so that it acts between the second shoulder (7) or second stop and the drive module (3).

25. Device as claimed in claim 23 or 24, **characterised in that** the sensor (23) is connected to a control system of the device.

26. Device as claimed in one of claims 23 to 25, **characterised in that** the sensor (23) is a piezoelectric measuring support disc.

27. Device as claimed in one of claims 23 to 26, **characterised in that** the sensor (23) is pretensioned.

28. Device as claimed in one of claims 3 to 27, **characterised in that** the second shoulder (7) or second stop is disposed on the drive module (3).

29. Device as claimed in one of claims 1 to 28, **characterised in that** a second rotary drive is provided as a means of driving the second shoulder (7) or second stop.

30. Device as claimed in one of claims 1 to 29, **characterised in that** the second shoulder (7) or second stop is mounted in a friction-bearing arrangement.

31. Device as claimed in one of claims 1 to 30, **characterised in that** the second shoulder or second stop can be rotated by means of a hollow shaft (32).

32. Device as claimed in claim 31, **characterised in that** the rotary shaft (33, 33') of the first shoulder (6) or first stop is guided in the hollow shaft (32).

33. Device as claimed in one of claims 8 to 27, **characterised in that** the second shoulder (7) or second stop is disposed on the base module (2).

34. Device as claimed in one of claims 1 to 33, **characterised in that** the rotation speeds of the shoulders (6, 7) or stops can be set so that they are different.

## Revendications

1. Dispositif pour l'assemblage de pièces selon la méthode de soudage par friction agitation avec un axe (33, 33') pouvant être entraîné en rotation, au niveau de son côté opposé au côté entraînement de l'axe est disposée une saillie (8) de type tige, à l'extrémité de laquelle est disposée une première butée constituée d'un premier épaulement (6), le premier épaulement (6) présentant un diamètre qui est supérieur au diamètre de la saillie (8) de type tige, et avec une deuxième butée constituée d'un deuxième épaulement (7) qui est agencée de telle sorte que les pièces (19) à assembler peuvent être contenues entre les butées (6, 7), par le fait qu'au moins une des butées (6, 7) peut être déplacée par translation, pour contenir les pièces (19) avec une force prédéfinie dans la direction de l'autre butée, le deuxième épaulement (7) ou la deuxième butée étant réalisé(e) de manière rotative,
**caractérisé en ce que**
le premier et le deuxième épaulement (6, 7) ou la première et la deuxième butée sont montés de telle sorte que les deux épaulements (6, 7) sont réalisé(e)s de manière à tourner en sens inverses.

2. Dispositif selon la revendication 1, **caractérisé en ce que** le dispositif (1) est réalisé de telle sorte que la rotation de l'axe (33, 33') et le mouvement engendrant la force sont engendrés de manière découplée indépendamment l'un de l'autre dans le dispositif (1) et sont introduits dans les pièces (19) à assembler.

3. Dispositif selon la revendication 1 ou 2, **caractérisé en ce qu'**un module d'entraînement (3) est prévu.

4. Dispositif selon la revendication 3, **caractérisé en ce que** le module d'entraînement engendre la rotation de l'axe (33, 33').

5. Dispositif selon la revendication 3 ou 4, **caractérisé en ce que** le module d'entraînement (3) engendre le mouvement de translation de l'au moins un épaulement ou de l'au moins une butée.

6. Dispositif selon l'une quelconque des revendications 1 à 5, **caractérisé en ce que** l'axe (33, 33') fait partie du module d'entraînement.

7. Dispositif selon l'une quelconque des revendications 1 à 6, **caractérisé en ce que** l'axe est monté sur roulement.

8. Dispositif selon l'une quelconque des revendications 1 à 7, **caractérisé en ce qu'**un module de base (2) est prévu.

9. Dispositif selon la revendication 8, **caractérisé en ce qu'**un logement du module d'entraînement (3) est prévu au niveau du module de base (2).

10. Dispositif selon la revendication 8 ou 9, **caractérisé en ce qu'**un palier à roulement (26) logeant l'axe (33) est prévu dans le module de base (2).

11. Dispositif selon l'une quelconque des revendications 8 à 10, **caractérisé en ce que** le module de base (2) et le module d'entraînement (3) sont reliés par le biais d'un guidage linéaire (11).

12. Dispositif selon la revendication 11, **caractérisé en ce que** le guidage linéaire (11) est un palier linéaire (36).

13. Dispositif selon l'une quelconque des revendications 8 à 12, **caractérisé en ce qu'**un élément (10), disposé entre le module de base (2) et le module d'entraînement (3), est prévu pour engendrer le mouvement de translation, lequel élément est relié au module de base (2) et au module d'entraînement (3).

14. Dispositif selon la revendication 13, **caractérisé en ce que** l'élément est un vérin (10).

15. Dispositif selon la revendication 14, **caractérisé en ce que** l'élément est un système de vérins (10).

16. Dispositif selon la revendication 15, **caractérisé en ce que** le système de vérins (10) est commandé de manière électrohydraulique.

17. Dispositif selon la revendication 15 ou 16, **caractérisé en ce qu'**un moteur pas à pas (9) est prévu pour la commande du système de vérins (10).

18. Dispositif selon l'une quelconque des revendications 8 à 17, **caractérisé en ce qu'**il est prévu au niveau du module de base (2), un raccord (4) pour un système de maniement (17).

19. Dispositif selon la revendication 18, combiné à un système de maniement (17), **caractérisé en ce que** le système de maniement (17) produit une poussée le long des zones à assembler des pièces (19).

20. Dispositif selon la revendication 18 ou 19, combiné à un système de maniement (17), **caractérisé en ce que** le système de maniement (17) est un robot.

21. Dispositif selon l'une quelconque des revendications 1 à 20, **caractérisé en ce que** l'axe peut être entraîné en rotation par le biais d'un moteur synchrone (12).

22. Dispositif selon l'une quelconque des revendications 1 à 21, **caractérisé en ce que** l'axe est relié par le biais d'un engrenage angulaire (13) à son entraînement rotatif.

23. Dispositif selon l'une quelconque des revendications 1 à 22, **caractérisé en ce qu'**un capteur (23) ou un système de capteurs est prévu pour l'enregistrement de la force agissant sur les pièces (19) à assembler.

24. Dispositif selon la revendication 23, **caractérisé en ce que** le capteur (23) est disposé au niveau du module de base (2) de manière active entre le deuxième épaulement (7) ou la deuxième butée et le module d'entraînement (3).

25. Dispositif selon la revendication 23 ou 24, **caractérisé en ce que** le capteur (23) est relié à une commande du dispositif.

26. Dispositif selon l'une quelconque des revendications 23 à 25, **caractérisé en ce que** le capteur (23) est un disque de mesure piézoélectrique.

27. Dispositif selon l'une quelconque des revendications 23 à 26, **caractérisé en ce que** le capteur (23) est précontraint.

28. Dispositif selon l'une quelconque des revendications 3 à 27, **caractérisé en ce que** le deuxième épaulement (7) ou la deuxième butée est situé au niveau du module d'entraînement (3).

29. Dispositif selon l'une quelconque des revendications 1 à 28, **caractérisé en ce qu'**un deuxième entraînement rotatif est prévu pour l'entraînement du deuxième épaulement (7) ou de la deuxième butée.

30. Dispositif selon l'une quelconque des revendications 1 à 29, **caractérisé en ce que** le deuxième épaulement (7) ou la deuxième butée est monté sur roulement.

31. Dispositif selon l'une quelconque des revendications 1 à 30, **caractérisé en ce que** le deuxième épaulement ou la deuxième butée peut tourner par le biais d'un axe creux (32).

32. Dispositif selon la revendication 31, **caractérisé en ce que** l'axe de rotation (33, 33') du premier épaulement (6) ou de la première butée est guidé dans l'axe creux (32).

33. Dispositif selon l'une quelconque des revendications 8 à 27, **caractérisé en ce que** le deuxième épaulement (7) ou la deuxième butée est situé au niveau du module de base (2).

34. Dispositif selon l'une quelconque des revendications 1 à 33, **caractérisé en ce que** les vitesses de rotation des épaulements (6, 7) ou des butées peuvent être réglées différemment.
